# EUROPEAN PATENT SPECIFICATION

(11) **EP 2 877 538 B1**
(45) Date of publication and mention of the grant of the patent: **06.09.2017**
(21) Application number: 13733004.9
(22) Date of filing: 04.07.2013
(51) Int. Cl.: C09B 67/02, D06P 3/66, D06P 5/02, D06P 1/382, D06P 1/673

(54) **HOME FABRIC DYE PRODUCT**
STOFFFÄRBEMITTEL FÜR DEN HAUSGEBRAUCH
PRODUIT DE TEINTURE DOMESTIQUE DE TISSUS

(30) Priority: 05.07.2012 GB 201211941
(43) Date of publication of application: 03.06.2015
(73) Proprietor: Henkel AG & Co. KGaA, 40589 Düsseldorf (DE)
(72) Inventor: TOMS, David, Orpington Kent BR6 9FB (GB)
(86) International application number: PCT/EP2013/064126
(87) International publication number: WO 2014/006132

(56) References cited:
- WO-A1-2009/047468
- WO-A2-2009/146069
- FR-A3- 2 659 295
- US-A- 5 145 484

## Description

This invention relates to a home fabric dye product. In particular, it relates to a solid dye product, which is capable of changing the colour of a fabric or topping up faded colours and is also suitable for use in a domestic washing machine.
Solid dye products for use in domestic washing machines and containing a dye, salt and alkali are known. In one known product, which is available under the trade name "Dylon Renovator", the dye, salt and alkali, as well as an anti-clumping or free flow agent, are contained in a single water-permeable sachet of the tea-bag type. The anti-clumping agent is required to avoid clumping of the dye which will lead to slower dissolution of the dye material and uneven dyeing results. In use, a Renovator sachet containing 50 g of dye/alkali/salt is placed in the drum of a washing machine with up to 600 g of fabric. Additional salt (usually 250 g of sodium chloride) must be added by the user to obtain optimum dyeing results. One of the problems with this product is that the anti-clumping or free flow agent, being a fine powder, can cause the dye powder to come through the sachet causing staining on the packaging and on the user's hands. Furthermore, this product is only suitable for topping up faded colours and is not suitable for changing the colour of a fabric.
In another known product, all of the dye, salt and alkali are contained in a water-impermeable container means, such as a water-impermeable sachet, thereby overcoming the clumping issue.
However, as the sachet must be cut by the user to empty its contents into the washing machine, it is difficult for the user to avoid contact with the dye resulting in staining of the user's skin.

WO2009/146069 is directed to single-use dye composition capable of rejuvenating the colour and texture of faded textile garments.

US5145484 discloses a stable, dust free commercial form comprising at least one water soluble mono-reactive dye and&or at least one water soluble poly-reactive dye in polyvinyl alcohol envelop. It is an object of the invention to avoid or minimize the disadvantages of the prior art.

According to the invention there is provided a solid dye product, which is suitable for changing the colour of a fabric and for use in a domestic washing machine, said dye product comprising:
a) a water-permeable sachet formed from a non-woven, water-permeable material and containing a water-soluble dye composition comprising from 40 to 70% by weight of one or more reactive dyes and from 30 to 60% by weight of one or more salts or one or more alkalis or a mixture thereof, the percentages being percentages by weight of the total dye composition in the water-permeable sachet; and
b) a water-impermeable container means containing a water-soluble dye fix composition comprising one or more alkalis, alone or in combination with one or more salts;
wherein the weight ratio of the dye composition to the dye fix composition is from 1:5 to 120 and the salt in the dye composition or the dye fix composition is an alkali metal salt of an inorganic acid; and the alkali in the dye composition or the dye fix composition is selected from sodium or potassium carbonate, sodium or potassium hydroxide, sodium or potassium metasilicate, sodium or potassium silicate, sodium or potassium bicarbonate, trisodium phosphate, ammonium hydroxide and triethanolamine, and any combination thereof. As used herein, the term "reactive dye" is intended to mean that a reactive substituent group in the dye molecule can form a covalent chemical bond with molecules in the fabric to be dyed.

Reactive dyes are the most suitable dyes for home use as they work at a low temperature, give colour fast results and do not stain the washing machine.

Suitable reactive dyes include those from the triazine, pyrimidine and vinyl derivative classes, having the following formulae: 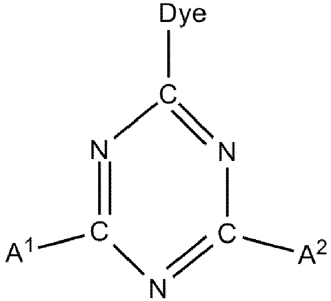 wherein A¹ is Cl and A² is aryl or Cl, preferably Cl; 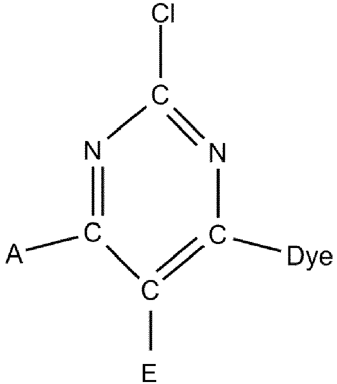
wherein A is Cl and E is H or Cl; and
Dye-X-CH₂-CH₂-O-SO₃H
wherein X is -SO₂-, -NHCO- or -SO₂NH-.

As used herein, the term "aryl" means a monocyclic or polycyclic-aromatic ring or ring radical comprising carbon and hydrogen atoms and which may be substituted or unsubstituted. Examples of suitable aryl groups include, but are not limited to, phenyl, tolyl, anthracenyl, fluorenyl, indenyl, azulenyl, and naphthyl, as well as benzo-fused carbocyclic moieties such as 5,6,7,8-tetrahydronaphthyl.

Preferred reactive dyes for use in the invention include one or more of the following:
▪ Cl Reactive Black 5 =tetrasodium 4-amino-5-hydroxy-3,6-bis[[4-[[2-(sulphonatooxy)ethyl]sulphonyl]phenyl]azo]naphthalene-2,7-disulphonate
▪ Everzol Orange GR (does not have a Cl number) = disodium 6-(4,6-dichloro-1,3,5-triazin-2-ylamino)-1-hydroxy-2-(4-(2-(sulfonatooxy)ethylsulfonyl)phenylazo)naphthalene-3-sulfonate
▪ Cl Reactive Red 239 = pentasodium 2-[[8-[[4-chloro-6-[[4-(2-sulfonato ethylsulfonyl)]phenyl]amino]-1,3,5-triazin-2-yl]amino-1-hydroxy-3,6-disulfonato-2-naphthalenyl]azo]naphthalene-1,5-disulfonate 2-[[8-[[4-chloro-6-[[4-[[2-ethenyl]sulfonyl]phenyl]amino]-1,3,5-triazin-2-yl]amino]-1-hydroxy-3,6-disulfonato-2-naphthalenyl]azo]naphthalene-1,5-disulfonate
• Cl Reactive Yellow 125 = disodium 7-[[2-(acetylamino)-4-[(5-chloro-2,6-difluoro-4-pyrimidinyl)amino]phenyl]azo]naphthalene-1,3-disulphonate
▪ Cl Reactive Yellow 27 = trisodium 4-[[4-[[(2,3-dichloro-6-quinoxalinyl)carbonyl]amino]-2-sulphonatophenyl]azo]-4,5-dihydro-5-oxo-1-(4-sulphonatophenyl)-1H-pyrazole-3-carboxylate
▪ Cl Reactive Orange 64 = 2-[[6-[(5-chloro-2,6-difluoro-4-pyrimidinyl)amino]-1-hydroxy-3-sulpho-2-naphthyl]azo]naphthalene-1,5-disulphonic acid, sodium salt
▪ Cl Reactive Red 123 = disodium 7-[(5-chloro-2,6-difluoropyrimidin-4-yl)amino]-4-hydroxy-3-[(4-methoxy-2-sulphonatophenyl)azo]naphthalene-2-sulphonate
▪ Cl Reactive Red 159 = 5-(benzoylamino)-3-[[5-[[(5-chloro-2,6-difluoro-4-pyrimidinyl)amino]methyl]-1-sulpho-2-naphthyl]azo]-4-hydroxynaphthalene-2,7-disulphonic acid, lithium sodium salt
▪ Cl Reactive Red 147 = tetrasodium 2-[[8-[[3-[(5-chloro-2,6-difluoro-4-pyrimidinyl)amino]benzoyl]amino]-1-hydroxy-3,6-disulphonato-2-naphthyl]azo]naphthalene-1,5-disulphonate
▪ Cl Reactive Blue 224
▪ Cl Reactive Blue 116 = Copper, [[[[3-[(5-chloro-2,6-difluoro-4-pyrimidinyl)amino]phenyl]amino]sulfonyl]-29H,31H-phthalocyaninato(2-)-N29,N30,N31,N32]-, aminosulfonyl sulfo derivatives, sodium salts
▪ Cl Reactive Blue 21 = Copper, [29H,31H-phthalocyaninato(2-)-N29,N30,N31,N32]-, sulfo [[4-[[2-(sulfooxy)ethyl]sulfonyl]phenyl]amino]sulfonyl derivatives
▪ Cl Reactive Blue 225 = lithium sodium hydrogen 4-amino-6-(5-(5-chloro-2,6-difluoropyrimidin-4-ylamino)-2-sulfonatophenylazo)-5-hydroxy-3-(4-(2-(sulfonatooxy)ethylsulfonyl)phenylazo)naphthalene-2,7-disulfonate
▪ Cl Reactive Blue 204 = hexasodium 6,13-dichloro-3,10-bis((4-(2,5-disulfonatoanilino)-6-fluoro-1,3,5-triazin-2-ylamino)prop-3-ylamino)-5,12-dioxa-7,14-diazapentacene-4,11-disulphonate
The reactive dye used herein preferably comprises at least 50%, or at least 60%, or at least 70%, or at least 75%, or at least 80%, or at least 85%, or at least 90%, or at least 95%, by weight of the dye itself, of a black, navy or deep blue reactive dye or a combination thereof. A suitable black reactive dye is Cl Reactive Black 5, and a suitable navy dye is Cl Reactive Blue 225.
It should be noted that commercial preparations of reactive dyes generally contain salt, usually sodium chloride or sodium sulphate, as a diluent. However, the percentages by weight quoted herein for the reactive dye do not include the salt of the commercial preparations, which is included in the percentages by weight quoted for the salt in the dye composition.
The salts suitable for use in the dye composition or in the dye fix composition herein include alkali metal salts of inorganic acids, preferably sodium or potassium chloride and sodium or potassium sulphate and combinations thereof. Sodium salts are preferred, especially sodium chloride.
The alkalis suitable for use in the dye composition or in the dye fix composition include sodium or potassium carbonate, sodium or potassium hydroxide, sodium or potassium metasilicate, sodium or potassium silicate, sodium or potassium bicarbonate, trisodium phosphate, ammonium hydroxide and organic alkalis such as triethanolamine, and combinations thereof. The sodium salts are preferred, especially sodium carbonate and sodium metasilicate. The alkali used is such that the final pH in the dye bath in the washing machine will be from 10.5 to 12.5, preferably 11.5.
The dye composition herein preferably comprises no anti-clumping or free flow agent or substantially no anti-clumping or free flow agent.
The dye composition may include from 0.1 to 1% by weight of minor additives such as perfumes and the like.
The dye composition herein may be in particulate and/or granular and/or powder form.

The dye composition herein preferably comprises the reactive dye in an amount of from 45 to 65%, or 50 to 60%, or 55 to 65%, or 60 to 70%, by weight of the total dye composition in the water-permeable sachet.

The dye composition herein preferably comprises from 35 to 55%, or 40 to 50%, or 35 to 45%, or 30 to 40%, by weight of the total dye composition in the water-permeable sachet, of a mixture of salt and alkali, wherein, preferably, the weight ratio of salt to alkali in the dye composition is from 2.5:1 to 7:1, more preferably 3.5:1 to 5:1 or 4:1 to 5:1.
The dye fix composition herein preferably comprises a mixture of one or more alkalis and one or more salts, wherein, preferably, the weight ratio of alkali to salt is from 3.8:1 to 2:1, more preferably 1:1 to 1.5:1 or 1:1 to 1.25:1.

The weight ratio of the dye composition to the dye fix composition is preferably from 1:5 to 1:10, more preferably 1:6 to 1:10, especially 1:6 or 1:8.

The water-permeable sachet containing the dye composition is formed from a non-woven, water-permeable material and is sealed at its periphery. The non-woven material may be formed from a thermoplastic material such as polyester, polypropylene or polyethylene or any combination thereof, optionally in combination with cellulose. The weight of the material in the water-permeable sachet is preferably 50 g/m², the porosity is preferably about 340 L/m²/s, and the thickness is preferably 159 µm. The sachet dimensions are conveniently 140 mm × 85 mm. The water-permeable sachet is conveniently a tea-bag type sachet.
The dye fix composition is contained in any suitable water-impermeable container means, such as, e.g., a sachet, carton or plastic tub. A container means in the form of a water-impermeable sachet is particularly preferred. The water-impermeable sachet may be formed from any suitable water-impermeable material. The water-impermeable sachet may be cut open by the user and then placed in the drum of the washing machine with its contents or, alternatively, the contents only of the water-impermeable sachet may be placed in the drum of the washing machine.

The dye product of the invention comprising the water-permeable sachet with the dye composition, together with the dye fix composition that is preferably contained in a water-impermeable sachet, is typically presented in a single package, such as for example, a box or carton, for the convenience of the user.

The invention also provides a method of dyeing a fabric using the dye product of the invention, the method comprising:
a) placing the water-permeable sachet containing the dye composition, the dye fix composition, and the fabric to be dyed in the drum of a washing machine; and
b) allowing the dyeing to take place at a temperature of from 30°C to 60°C.

The water-permeable sachet preferably contains from 40 to 50 g of dye composition; the dye fix composition is preferably present in an amount of 300 g to 400 g; and the fabric weight is preferably from 200 g to 1.2 kg. The temperature in step b) is preferably 40°C. The dye fix composition may be contained in a water-impermeable sachet, which has been cut open by a user before placing in the drum of the washing machine.
The fabric to be dyed may be, for example, one or more items of clothing or a home furnishing fabric and is preferably moistened before dyeing.
The following Examples illustrate the invention.

### Example 1

A dye product according to the invention was prepared containing the following components

| | | | Velvet Black / Jeans Black |
|---|---|---|---|
| DYE | Sodium Metasilicate | | 9.70% |
| | Petal Fragrance | | 0.05% |
| | disodium 6-(4,6-dichloro-1,3,5-triazin-2-ylamino)-1-hydroxy-2-(4-(2-(sulfonatooxy)ethylsulfonyl)phenylazo)naphthalene-3-sulfonate | Everzol Orange GR | 1.62% |
| | pentasodium 2-[[8-[[4-chloro-6-[[4-(2-sulfonato ethylsulfonyl)]phenyl]amino]-1,3,5-triazin-2-yl]amino-1-hydroxy-3,6-disulfonato-2-naphthalenyl]azo]naphthalene-1,5-disulfonate 2-[[8-[[4-chloro-6-[[4-[[2-ethenyl]sulfonyl]phenyl]amino]-1,3,5-triazin-2-yl]amino]-1-hydroxy-3,6-disulfonato-2-naphthalenyl]azo]naphthalene-1,5-disulfonate | Cl Reactive Red 239 | 0.50% |
| | tetrasodium 4-amino-5-hydroxy-3,6-bis[[4-[[2-(sulphonatooxy)ethyl]sulphonyl]phenyl]azo]naphthalene-2,7-disulphonate | Cl Reactive Black 5 | 45.60% |
| | Sodium chloride | | 42.53% |
| | | | |
| DYE FIX | Sodium metasilicate | | 9.70% |
| | Sodium chloride | | 45.15% |
| | Sodium carbonate | | 45.15% |

Everzol Orange GR is available from Everlight Chemical Industrial Corp.

Cl Reactive Red 239 is available from Everlight Chemical Industrial Corp. under the trade name Everzol Brilliant Red 3BS hc.
Cl Reactive Black 5 is available from Everlight Chemical Industrial Corp. under the trade name Everzol Black GSP.

The amount of salt present in the commercial dye preparations used is as follows:

Everzol Black GSP = 40% salt in commercial dye = contributes 30.40% salt to the final formula. Everzol Brilliant Red 3BS hc = 50% salt = contributes 0.5% salt to the final formula. Everzol Orange GR = 10% salt = contributes 0.18% salt to the final formula.

Accordingly, a total of 31.08% of the salt comes from the commercial dyes and an additional 11.45% is added to give 42.53% total salt in the dye composition.

40-50 g of the dye composition are filled into a water-permeable sachet (140 mm × 85 mm) of the tea-bag type, grade IMA C51, available from Glatfelter, and heat-sealed. 300-400 g of the dye fix composition are filled into a water-impermeable sachet having dimensions of approximately 15 cm (length) x 10 cm (width), and the sachet is heat-sealed.

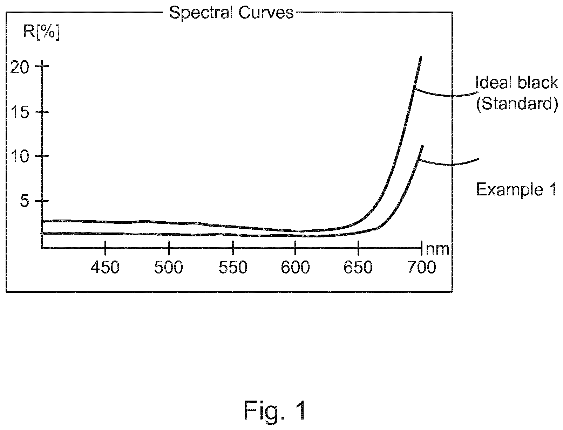

Comparison of the product prepared in Example 1 above with a known product:
- Inventive product prepared in Example 1 above: 50g dye / 300g dye fix composition
   i. 400g cotton
   ii. Hotpoint washing machine = Hotpoint Aquarius WML 520
   iii. Tea-bag of dye composition and contents of water-impermeable sachet containing dye fix composition added to drum of machine
   iv. Damp fabric added to machine
   v. Cotton 40°C cycle run
   vi. Washing powder added and another 40°C cycle run to clean excess dye off fabric and machine
   vii. Fabric dried
- Known product: Ideal from AC Marca - dye for cotton, linen, silk, viscose
   i. 75ml trough of liquid dye, 100g trough of fix
   ii. 400g cotton
   iii. Hotpoint washing machine (same as above)
   iv. Corners cut off the dye and fix troughs and placed into machine. 500g table salt added
   v. Damp fabric added to machine
   vi. Cotton 40°C cycle run
   vii. Washing powder added and another 40°C cycle run to clean excess dye off fabric and machine
   viii. Fabric dried
- Result: both the fabric dyed with the inventive product and Ideal were level. The inventive product was 70% stronger than the Ideal black as shown by spectrophotometric analysis, using Spectroflash 600 Data Color, dataMaster V2.3. Both products were used at their full strength, which for the Ideal product was as recommended in the manufacturer's instructions. Using the Ideal product as standard (set at 100%), the colour strength relation % of the product of Example 1, at 610 nm, was 170.09. The colour difference between the two products was calculated using CMC 1.0, 2.0:1.0. The results are illustrated in Fig. 1, which is a graph of % reflectance vs wavelength in nm.

### Example 2

A dye product according to the invention was prepared containing the following components:

| | | | Velvet Black / Jeans Black II |
|---|---|---|---|
| DYE | Sodium Metasilicate | | 9.70 |
| | Sodium carbonate anhydrous | | 11.85 |
| | Petal Fragrance | | 0.05 |
| | disodium 6-(4,6-dichloro-1,3,5-triazin-2-ylamino)-1-hydroxy-2(4(2(sulfonatooxy)ethylsulfonyl)phenylazo) naphthalene-3-sulfonate | Everzol Orange GR | 19.44 |
| | pentasodium 2-[[8-[[4-chloro-6-[[4-(2-sulfonato ethylsulfonyl)]phenyl]amino]-1,3,5-triazin-2-yl]amino-1-hydroxy-3,6-disulfonato-2-naphthalenyl]azo]naphthalene-1,5-disulfonate 2-[[8-[[4-chloro-6-[[4-[[2-ethenyl]sulfonyl]phenyl]amino]-1,3,5-triazin-2-yl]amino]-1-hydroxy-3,6-disulfonato-2-naphthalenyl]azo]naphthalene-1,5-disulfonate | Cl Reactive Red 239 | 3.00 |
| | tetrasodium 4-amino-5-hydroxy-3,6-bis[[4-[[2-(sulphonatooxy)ethyl]sulphonyl]phenyl]azo]naphthalene -2,7-disulphonate | Cl Reactive Black 5 | 2.88 |
| | Lithium sodium hydrogen 4-amino-6-(5-(5-chloro-2,6-difluoropyrimidin-4-ylamino)-2-sulfonatophenylazo)-5-hydroxy-3(4(2(sulfonatooxy)ethylsulfonyl)phenylazo) naphthalene-2,7-disulfonate | Cl Reactive Blue 225 | 29.52 |
| | Sodium chloride | | 23.56 |
| | | | |
| DYE FIX | Sodium metasilicate | | 1.50 |
| | Sodium chloride | | 49.25 |
| | Sodium carbonate | | 49.25 |

Cl Reactive Blue 225 is available from Dystar under the trade name Levafix Navy EBNA.
The amount of salt present in Levafix Navy EBNA = 18% salt in commercial dye and contributes 6.48% salt to the final formula.

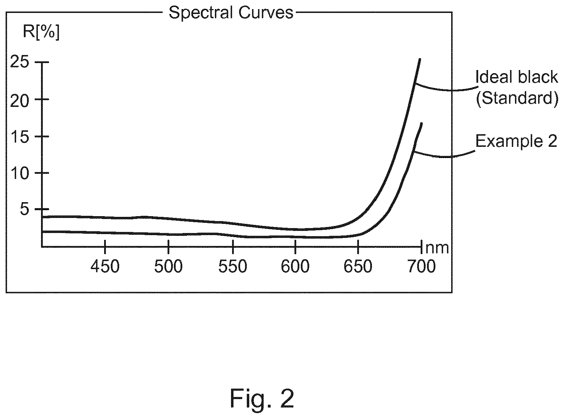

The product prepared in Example 2 above was compared with the "Ideal black" product according to the procedure in Example 1, except that 400 g of dye fix were used (50g of dye composition) and the wavelength of measurement was 600 nm. Using the Ideal product as standard (set at 100%), the colour strength relation % of the product of Example 2, at 600 nm, was 196.96. The colour difference between the two products was calculated as in Example 1 using CMC 1.0, 2.0:1.0. Thus, the inventive product was 96% stronger than the Ideal black. The results are illustrated in Fig. 2.

The dye compositions prepared in Examples 1 and 2 above have the following properties:
- They are sufficiently free flowing to allow them to be filled into a small sachet opening during production
- They are not so free flowing that they will pass through the sachet walls as a powder during transport causing staining of the sachet and outer container and transferring to the hands of the user
- Once in the washing machine, they will dissolve very quickly so that good dyeing results will be obtained.

The invention is not limited to the embodiments described herein, which may be modified or varied without departing from the scope of the invention.

## Claims

1. A solid dye product, which is suitable for changing the colour of a fabric and for use in a domestic washing machine, said dye product comprising:
a) a water-permeable sachet formed from a non-woven, water-permeable material and containing a water-soluble dye composition comprising from about 40 to about 70% by weight of one or more reactive dyes and from about 30 to about 60% by weight of one or more salts or one or more alkalis or a mixture thereof, the percentages being percentages by weight of the total dye composition in the water-permeable sachet; and
b) a water-impermeable container means containing a water-soluble dye fix composition comprising one or more alkalis, alone or in combination with one or more salts;
wherein
• the weight ratio of the dye composition to the dye fix composition is from about 1:5 to about 1:20,
• the salt in the dye composition or the dye fix composition is an alkali metal salt of an inorganic acid; and
• the alkali in the dye composition or the dye fix composition is selected from sodium or potassium carbonate, sodium or potassium hydroxide, sodium or potassium metasilicate, sodium or potassium silicate, sodium or potassium bicarbonate, trisodium phosphate, ammonium hydroxide and triethanolamine, and any combination thereof.

2. A dye product according to claim 1, wherein the reactive dye is selected from the triazine, pyrimidine and vinyl derivative classes, having the following formulae: 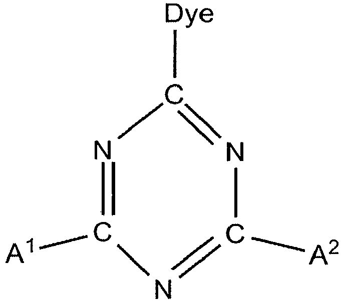 wherein A¹ is Cl and A² is aryl or Cl, 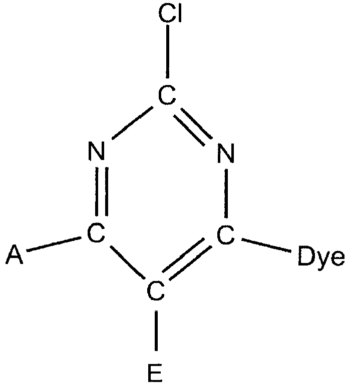
wherein A is Cl and E is H or Cl; and
Dye-X-CH₂-CH₂-O-SO₃H
wherein X is -SO₂-, -NHCO- or -SO₂NH-.

3. A dye product according to claim 1, wherein the reactive dye is selected from one or more of the following:
▪ Cl Reactive Black 5 =tetrasodium 4-amino-5-hydroxy-3,6-bis[[4-[[2-(sulphonatooxy)ethyl]sulphonyl]phenyl]azo]naphthalene-2,7-disulphonate
▪ Everzol Orange GR (does not have a Cl number) = disodium 6-(4,6-dichloro-1,3,5-triazin-2-ylamino)-1-hydroxy-2-(4-(2-(sulfonatooxy)ethylsulfonyl)phenylazo)naphthalene-3-sulfonat
▪ Cl Reactive Red 239 = pentasodium 2-[[8-[[4-chloro-6-[[4-(2-sulfonato ethylsulfonyl)]phenyl]amino]-1,3,5-triazin-2-yl]amino-1-hydroxy-3,6-disulfonato-2-naphthalenyl]azo]naphthalene-1,5-disulfonate 2-[[8-[[4-chloro-6-[[4-[[2-ethenyl]sulfonyl]phenyl]amino]-1,3,5-triazin-2-yl]amino]-1-hydroxy-3,6-disulfonato-2-naphthalenyl]azo]naphthalene-1,5-disulfonate
▪ Cl Reactive Yellow 125 = disodium 7-[[2-(acetylamino)-4-[(5-chloro-2,6-difluoro-4-pyrimidinyl)amino]phenyl]azo]naphthalene-1,3-disulphonate
▪ Cl Reactive Yellow 27 = trisodium 4-[[4-[[(2,3-dichloro-6-quinoxalinyl)carbonyl]amino]-2-sulphonatophenyl]azo]-4,5-dihydro-5-oxo-1-(4-sulphonatophenyl)=1H-pyrazole-3-carboxylate
▪ Cl Reactive Orange 64 = 2-[[6-[(5-chloro-2,6-difluoro-4-pyrimidinyl)amino]-1-hydroxy-3-sulpho-2-naphthyl]azo]naphthalene-1,5-disulphonic acid, sodium salt
▪ Cl Reactive Red 123 = disodium 7-[(5-chloro-2,6-difluoropyrimidin-4-yl)amino]-4-hydroxy-3-[(4-methoxy-2-sulphonatophenyl)azo]naphthalene-2-sulphonate
▪ Cl Reactive Red 159 = 5-(benzoylamino)-3-[[5-[[(5-chloro-2,6-difluoro-4-pyrimidinyl)amino]methyl]-1-sulpho-2-naphthyl]azo]-4-hydroxynaphthalene-2,7-disulphonic acid, lithium sodium salt
▪ Cl Reactive Red 147 = tetrasodium 2-[[8-[[3-[(5-chloro-2,6-difluoro-4-pyrimidinyl)amino]benzoyl]amino]-1-hydroxy-3,6-disulphonato-2-naphthyl]azo]naphthalene-1,5-disulphonate
▪ Cl Reactive Blue 224
▪ Cl Reactive Blue 116 = Copper, [[[[3-[(5-chloro-2,6-difluoro-4-pyrimidinyl)amino]phenyl]amino]sulfonyl]-29H,31H-phthalocyaninato(2-)-N29,N30,N31,N32]-, aminosulfonyl sulfo derivatives, sodium salts
▪ Cl Reactive Blue 21 = Copper, [29H,31H-phthalocyaninato(2-)-N29,N30,N31,N32]-, sulfo [[4-[[2-(sulfooxy)ethyl]sulfonyl]phenyl]amino]sulfonyl derivatives
▪ Cl Reactive Blue 225 = lithium sodium hydrogen 4-amino-6-(5-(5-chloro-2,6-difluoropyrimidin-4-ylamino)-2-sulfonatophenylazo)-5-hydroxy-3-(4-(2-(sulfonatooxy)ethylsulfonyl)phenylazo)naphthalene-2,7-disulfonate
▪ Cl Reactive Blue 204 = hexasodium 6,13-dichloro-3,10-bis((4-(2,5-disulfonatoanilino)-6-fluoro-1,3,5-triazin-2-ylamino)prop-3-ylamino)-5,12-dioxa-7,14-diazapentacene-4,11-disulphonate.

4. A dye product according to any preceding claim, wherein the reactive dye comprises at least 50%, or at least 60%, or at least 70%, or at least 75%, or at least 80%, or at least 85%, or at least 90%, or at least 95%, by weight of the dye itself, of a black, navy or deep blue reactive dye or a combination thereof; wherein, the black reactive dye is Cl Reactive Black 5, and/or wherein the navy reactive dye is Cl Reactive Blue 225.

5. A dye product according to any preceding claim, wherein the salt in the dye composition or the dye fix composition is sodium chloride or sodium sulphate.

6. A dye product according to any preceding claim, wherein the alkali in the dye composition or the dye fix composition comprises one or more of sodium carbonate, sodium hydroxide, sodium metasilicate, sodium silicate, sodium bicarbonate, and trisodium phosphate.

7. A dye product according to any preceding claim, wherein the dye composition comprises no anti-clumping or free flow agent; and/or wherein the dye composition further comprises from 0.1 to 1 % by weight of minor additives such as a perfume; and/or wherein the dye composition is in particulate and/or granular and/or powder form.

8. A dye product according to any preceding claim, wherein the dye composition comprises the reactive dye in an amount of from about 45 to 65%, or about 50 to 60%, or about 55 to 65%, or about 60 to 70%, by weight of the total dye composition in the water-permeable sachet.

9. A dye product according to any preceding claim, wherein the dye composition comprises from about 35 to 55%, or about 40 to 50%, or about 35 to 45%, or about 30 to 40%, by weight of the total dye composition in the water-permeable sachet, of a mixture of salt and alkali; and/or wherein the weight ratio of salt to alkali in the dye composition is from about 2.5:1 to 7:1, or about 3.5:1 to 5:1 or about 4:1 to 5:1.

10. A dye product according to any preceding claim, wherein the dye fix composition comprises a mixture of one or more alkalis and one or more salts.

11. A dye product according to any preceding claim, wherein the weight ratio of the dye composition to the dye fix composition is from about 1:5 to 1:10 or about 1:6 to 1:10, or about 1:6 or about 1:8.

12. A dye product according to any preceding claim, wherein the water-impermeable container means containing the dye fix composition is a sachet.

13. A dye product according to any preceding claim, wherein the water-permeable sachet containing the dye composition and the water-impermeable container means containing the dye fix composition are contained in a single package.

14. A method of dyeing a fabric using a dye product according to any preceding claim, the method comprising:
a) placing the water-permeable sachet containing the dye composition, the dye fix composition, and the fabric to be dyed in the drum of a washing machine; and
b) allowing the dyeing to take place at a temperature of from about 30°C to about 60°C.

15. A method according to claim 14, wherein the water-permeable sachet contains from about 40 to 50 g of dye composition, the dye fix composition is present in an amount of from about 300 to 400 g, and the fabric weight is from about 200 g to about 1.2 kg; and/or wherein the temperature in step b) is about 40°C.

## Patentansprüche

1. Festes Farbstofferzeugnis, geeignet zum Ändern der Farbe eines Stoffs und zum Verwenden in einer Haushaltswaschmaschine, wobei das Farbstofferzeugnis Folgendes umfasst:
a) einen wasserdurchlässigen Beutel, ausgebildet aus einem wasserdurchlässigen Vliesmaterial und eine wasserlösliche Farbstoffzusammensetzung enthaltend, die 40 bis 70 Gew.-% eines oder mehrerer reaktiver Farbstoffe und 30 bis 60 Gew.-% eines oder mehrerer Salze oder eines oder mehrerer Alkalis oder eines Gemischs daraus umfasst, wobei die Prozentangaben Gewichtsprozentangaben sind, bezogen auf die gesamte Farbstoffzusammensetzung im wasserdurchlässigen Beutel; und
b) ein wasserundurchlässiges Behältermittel, das eine wasserlösliche Farbstofffixierzusammensetzung mit einem oder mehreren Alkalis, allein oder in Verbindung mit einem oder mehreren Salzen umfasst;
wobei
• das Gewichtsverhältnis der Farbstoffzusammensetzung zu der Farbstofffixierzusammensetzung 1:5 bis 1:20 beträgt,
• das Salz in der Farbstoffzusammensetzung oder in der Farbstofffixierzusammensetzung ein Alkalimetallsalz einer anorganischen Säure ist; und
• das Alkali in der Farbstoffzusammensetzung oder in der Farbstofffixierzusammensetzung ausgewählt ist aus Natrium- oder Kaliumcarbonat, Natrium- oder Kaliumhydroxid, Natrium- oder Kaliummetasilicat, Natrium- oder Kaliumsilicat, Natrium- oder Kaliumbicarbonat, Trinatriumphosphat, Ammoniumhydroxid und Triethanolamin und einer beliebigen Kombination daraus.

2. Farbstofferzeugnis nach Anspruch 1, wobei der reaktive Farbstoff ausgewählt ist aus den Triazin-, Pyrimidin- und Vinylderivatklassen mit den folgenden Formeln: 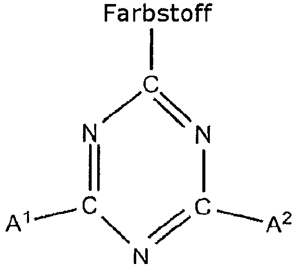 wobei A¹ Cl ist und A² Aryl oder Cl ist, 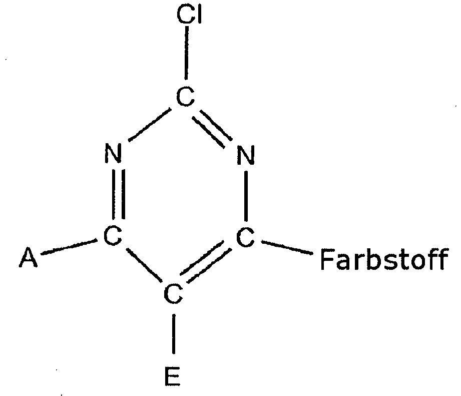
wobei A Cl ist und E H oder Cl ist; und
Farbstoff-X-CH₂-CH₂-O-SO₃H
wobei X -SO₂-, -NHCO- oder -SO₂NH- ist.

3. Farbstofferzeugnis nach Anspruch 1, wobei der reaktive Farbstoff ausgewählt ist aus einem oder mehreren der Folgenden:
▪ Cl Reaktivschwarz 5 = Tetranatrium-4-amino-5-hydroxy-3,6-bis-[[4-[[2-(sulfonatoxy)ethyl]sulfonyl]phenyl]azo]naphthalen-2,7-disulfonat
▪ Everzol-Orange GR (hat keine Cl-Nummer) = Dinatrium-6-(4,6-dichlor-1,3,5-triazin-2-ylamino)-1-hydroxy-2-(4-(2-(sulfonatoxy)ethylsulfonyl)phenylazo)naphthalen-3-sulfonat
▪ Cl Reaktivrot 239 = Pentanatrium-2-[[8-[[4-chlor-6-[[4-(2-sulfonatethylsulfonyl)]phenyl]amino]-1,3,5-triazin-2-yl]amino-1-hydroxy-3,6-disulfonat-2-naphthalenyl]azo]naphthalen-1,5-disulfonat-2[[8-[[4-chlor-6-[[4-[[2-ethenyl]sulfonyl]phenyl]amino]-1,3,5-triazin-2-yl]amino]-1-hydroxy-3,6-disulfonat-2-naphthalenyl]azo]naphthalen-1,5-disulfonat
▪ Cl Reaktivgelb 125 = Dinatrium-7-[[2-(acetylamino)-4-[(5-chlor-2,6-difluor-4-pyrimidinyl)amino]phenyl]azo]naphthalen-1,3-disulfonat
▪ Cl Reaktivgelb 27 = Trinatrium-4-[[4-[[(2,3-dichlor-6-chinoxalinyl)carbonyl]amino]-2-sulfonatphenyl]azo]-4,5-dihydro-5-oxo-1-(4-sulfonatphenyl)-1H-pyrazol-3-carboxylat
▪ Cl Reaktivorange 64 = 2-[[6-[(5-Chlor-2,6-difluor-4-pyrimidinyl)amino]-1-hydroxy-3-sulfo-2-naphthyl]azo]naphthalen-1,5-disulfonsäure, Natriumsalz
▪ Cl Reaktivrot 123 = Dinatrium-7-[(5-chlor-2,6-difluorpyrimidin-4-yl)amino]-4-hydroxy-3-[(4-methoxy-2-sulfonatphenyl)azo]naphthalen-2-sulfonat
▪ Cl Reaktivrot 159 = 5-(Benzoylamino)-3-[[5-[[(5-chlor-2,6-difluor-4-pyrimidinyl)amino]methyl]-1-sulfo-2-naphthyl]azo]-4-hydroxynaphthalen-2,7-disulfonsäure, Lithiumnatriumsalz
▪ Cl Reaktivrot 147 = Tetranatrium-2-[[8-[[3-[(5-chlor-2,6-difluor-4-pyrimidinyl)amino]benzoyl]amino]-1-hydroxy-3,6-disulfonat-2-naphthyl]azo]naphthalen-1,5-disulfonat
▪ Cl Reaktivblau 224
▪ Cl Reaktivblau 116 = Kupfer, [[[[3-[(5-Chlor-2,6-difluor-4-pyrimidinyl)amino]phenyl]amino]sulfonyl]-29H,31H-phthalocyaninat(2-)-N29,N30,N31,N32]-, Aminosulfonylsulfoderivate, Natriumsalze
▪ Cl Reaktivblau 21 = Kupfer, [29H,31H-Phthalocyaninat(2-)-N29,N30,N31,N32]-, Sulfo-[[4-[[2-(sulfooxy)ethyl]sulfonyl]phenyl]amino]sulfonylderivate
▪ Cl Reaktivblau 225 = Lithiumnatriumwasserstoff-4-amino-6-(5-(5-chlor-2,6-difluorpyrimidin-4-ylamin)-2-sulfonatphenylazo)-5-hydroxy-3-(4-(2-(sulfonatoxy)ethylsulfonyl)phenylazo)naphthalen-2,7-disulfonat
▪ Cl Reaktivblau 204 = Hexanatrium-6,13-dichlor-3,10-bis-((4-(2,5-disulfonatanilino)-6-fluor-1,3,5-triazin-2-ylamin)prop-3-ylamin)-5,12-dioxa-7,14-diazapentacen-4,11-disulfonat.

4. Farbstofferzeugnis nach einem der vorhergehenden Ansprüche, wobei der reaktive Farbstoff wenigstens 50 Gew.-% oder wenigstens 60 Gew.-% oder wenigstens 70 Gew.-% oder wenigstens 75 Gew.-% oder wenigstens 80 Gew.-% oder wenigstens 85 Gew.-% oder wenigstens 90 Gew.-% oder wenigstens 95 Gew.-%, bezogen auf den Farbstoff selbst, eines schwarzen, eines marineblauen oder eines dunkelblauen reaktiven Farbstoffs oder einer Kombination daraus umfasst; wobei der schwarze reaktive Farbstoff Cl Reaktivschwarz 5 ist und/oder wobei der marineblaue reaktive Farbstoff Cl Reaktivblau 225 ist.

5. Farbstofferzeugnis nach einem der vorhergehenden Ansprüche, wobei das Salz in der Farbstoffzusammensetzung oder in der Farbstofffixierzusammensetzung Natriumchlorid oder Natriumsulfat ist.

6. Farbstofferzeugnis nach einem der vorhergehenden Ansprüche, wobei das Alkali in der Farbstoffzusammensetzung oder in der Farbstofffixierzusammensetzung Natriumcarbonat, Natriumhydroxid, Natriummetasilicat, Natriumsilicat, Natriumbicarbonat und/oder Trinatriumphosphat umfasst.

7. Farbstofferzeugnis nach einem der vorhergehenden Ansprüche, wobei die Farbstoffzusammensetzung kein Antiklumpmittel oder Rieselhilfsmittel umfasst; und/oder wobei die Farbstoffzusammensetzung ferner 0,1 bis 1 Gew.-% geringerer Zusatzstoffe, wie etwa einen Duftstoff, umfasst; und/oder wobei die Farbstoffzusammensetzung in Partikel- und/oder Granulat- und/oder Pulverform vorliegt.

8. Farbstofferzeugnis nach einem der vorhergehenden Ansprüche, wobei die Farbstoffzusammensetzung den reaktiven Farbstoff in einer Menge von 45 bis 65 Gew.-% oder 50 bis 60 Gew.-% oder 55 bis 65 Gew.-% oder 60 bis 70 Gew.-% bezogen auf die gesamte Farbstoffzusammensetzung im wasserdurchlässigen Beutel umfasst.

9. Farbstofferzeugnis nach einem der vorhergehenden Ansprüche, wobei die Farbstoffzusammensetzung von 35 bis 55 Gew.-% oder 40 bis 50 Gew.-% oder 35 bis 45 Gew.-% oder 30 bis 40 Gew.-%, bezogen auf die gesamte Farbstoffzusammensetzung im wasserdurchlässigen Beutel, eines Gemischs aus Salz und Alkali umfasst; und/oder wobei das Gewichtsverhältnis von Salz zu Alkali in der Farbstoffzusammensetzung von 2,5:1 bis 7:1, oder 3,5:1 bis 5:1 oder 4:1 bis 5:1 beträgt.

10. Farbstofferzeugnis nach einem der vorhergehenden Ansprüche, wobei die Farbstofffixierzusammensetzung ein Gemisch aus einem oder mehreren Alkalis und einem oder mehreren Salzen umfasst.

11. Farbstofferzeugnis nach einem der vorhergehenden Ansprüche, wobei das Gewichtsverhältnis der Farbstoffzusammensetzung zu der Farbstofffixierzusammensetzung 1:5 bis 1:10 oder 1:6 bis 1:10 oder 1:6 oder 1:8 beträgt.

12. Farbstofferzeugnis nach einem der vorhergehenden Ansprüche, wobei das wasserundurchlässige Behältermittel, das die Farbstofffixierzusammensetzung enthält, ein Beutel ist.

13. Farbstofferzeugnis nach einem der vorhergehenden Ansprüche, wobei der wasserdurchlässige Beutel, der die Farbstoffzusammensetzung enthält, und das wasserundurchlässige Behältermittel, das die Farbstofffixierzusammensetzung enthält, in einer einzigen Verpackung enthalten sind.

14. Verfahren zum Färben eines Stoffs unter Einsatz eines Farbstofferzeugnisses nach einem der vorhergehenden Ansprüche, wobei das Verfahren Folgendes umfasst:
a) Anordnen des wasserdurchlässigen Beutels, der die Farbstoffzusammensetzung enthält, der Farbstofffixierzusammensetzung und des zu färbenden Stoffes in der Trommel einer Waschmaschine; und
b) Ermöglichen, dass das Färben bei einer Temperatur von 30 °C bis 60 °C stattfindet.

15. Verfahren nach Anspruch 14, wobei der wasserdurchlässige Beutel 40 bis 50 g Farbstoffzusammensetzung enthält, die Farbstofffixierzusammensetzung in einer Menge von 300 bis 400 g vorliegt und das Stoffgewicht 200 g bis 1,2 kg beträgt; und/oder wobei die Temperatur in Schritt b) 40 °C beträgt.

## Revendications

1. Produit de teinture solide contenant à la modification de la couleur d'un tissu et destiné à être utilisé dans une machine à laver domestique, ledit produit de teinture comprenant :
a) un sachet perméable à l'eau constitué d'un matériau non-tissé perméable à l'eau et contenant une composition colorante hydrosoluble contenant 40 à 70 % en poids d'au moins un colorant réactif et 30 à 60 % en poids d'au moins un sel d'un ou plusieurs alcalins ou un mélange de ceux-ci, les pourcentages étant des pourcentages en poids de la composition colorante totale dans le sachet perméable à l'eau ; et
b) un récipient imperméable à l'eau contenant une composition de fixation du colorant hydrosoluble, contenant un ou plusieurs sels alcalins seuls ou en combinaison avec un ou plusieurs sels ;
où
• le rapport pondéral de la composition colorante à la composition de fixation du colorant est de 1:5 à 1:20 ;
• le sel dans la composition colorante ou la composition de fixation de colorant est un sel de métal alcalin d'un acide minéral ; et
• le sel alcalin dans la composition colorante ou la composition de fixation de colorant est choisi parmi le carbonate de potassium, l'hydroxyde de sodium ou de potassium, le métasilicate de sodium ou de potassium, le silicate de sodium ou de potassium, le bicarbonate de sodium ou de potassium, le phosphate trisodique, l'hydroxyde d'ammonium et triéthanolamine, et tout mélange de ceux-ci.

2. Produit colorant selon la revendication 1, dans lequel le colorant réactif est choisi parmi la triazine, la pyrimidine et des classes de dérivés vinyliques de formule suivante : 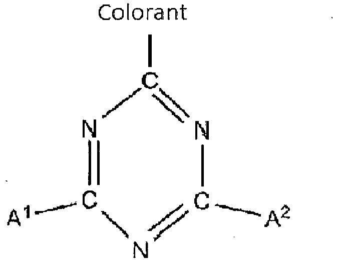 où A¹ est Cl et A² est un aryle ou Cl, 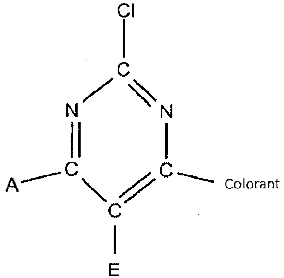
où A est Cl et E est H ou Cl ; et
Colorant-X-CH₂-CH₂-O-SO₃H
où X est -SO₂-, -NHCO- ou -SO₂NH-.

3. Produit colorant selon la revendication 1, dans lequel le colorant réactif est choisi parmi au moins un des suivants :
• Cl Reactive Black 5 = 4-amino-5-hydroxy-3,6-bis-[(4-[[2-(sulfonatooxy)éthyl]sulfonyl]phényl]azo]naphtalène-2,7-disulfonate de tétrasodium
• Everzol Orange GR (n'a pas de numéro Cl) = 6-(4,6-dichloro-1,3,5-triazin-2-ylamino)-1-hydroxy-2-(4-(2-(sulfonatooxy)éthylsulfonyl)phénylazo)naphtalène-3-sulfonate de disodium
• Cl Reactive Red 239 = 2-[[8-[[4-chloro-6-[[4-(2-sulfonatoéthylsulfonyl)]phényl]amino)-1,3,5-triazin-2-yl]amino-1-hydroxy-3,6-disulfonato-2-naphtalényl]azo)naphtalène-1,5-disulfonate 2-([8-[[4-chloro-6-[[4-[2-éthényl]sulfonyl]phényl]amino]-1,3,5-triazin-2-yl]amino-1-hydroxy-3,6-disulfonato-2-naphtalényl]azo]naphtalène-1,5-disulfonate de pentasodium
• Cl Reactive Yellow 125 = 7-[[2-(acétylamino)-4-[(5-chloro-2,6-difluoro-4-pyrimidinyl)amino]phényl]azo]naphtalène-1,3-disulfonate de disodium
• Cl Reactive Yellow 27 = 4-[[4-[[(2,3-dichloro-6-quinoxalinyl)carbonyl]amino]-2-sulfonatophényl]azo]-4,5-dihydro-5-oxo-1-(4-sulfonatophényl)-1H-pyrazole-3-carboxylate de trisodium
• Cl Reactive Orange 64 = 2-[[6-[(5-chloro-2,6-difluoro-4-pyridinyl)amino]-1-hydroxy-3-sulfo-2-naphtyl]azo]naphtalène-1,5-disulfonate de sodium
• Cl Reactive Red 123 = 7-[(5-chloro-2,6-dufluoropyrimidin-4-yl)amino]-4-hydroxy-3-[(4-méthoxy-2-sulfonatophényl)azo]naphtalène-2-sulfonate de disodium
• Cl Reactive Red 159 = 5-(benzoylamino)-3-[[5-[[(5-chloro-2,6-difluoro-4-pyrimidinyl)amino]méthyl]-1-sulfo-2-naphtyl]azo]-4-hydroxynaphtalène-2,7-disulfonate de lithium
• Cl Reactive Red 147 = 2-[[8-[[3-[[(5-chloro-2,6-difluoro-4-pyrimidyl)amino]benzoyl]amino]-1-hydroxy-3,6-disulfonato-2-naphtyl]azo]naphtalène-1,5-disulfonate de tétrasodium
• Cl Reactive Blue 224
• Cl Reactive Blue 116 = sels sulfoaminosulfonyl de cuivre et de sodium de [[[[3-[(5-chloro-2,6-difluoro-4-pyrimidyl)amino]phényl]amino]sulfonyl]-29H,31H-phtalocyaninato(2-)-N29,N30,N31,N32]
• Cl Reactive Blue 21 = dérivés [29H,31H-phtalocyaninato(2-)-N29,N30, N31, N32] sulfo [[4-[[2-(sulfooxy)éthyl]sulfonyl]phényl]amino]sulfonyles de cuivre
• Cl Reactive Blue 225 = 4-amino-6-(5-(5 chloro-2,6-difluoropyrimidin-4-ylamino)-2-sulfonatophénylazo]-5-hydroxy-3-(4-(2-(sulfonatooxy)éthylsulfonyl)phénylazo)naphtalène-2,7-disulfonate de lithium, sodium et hydrogène
• Cl Reactive Blue 204 = 6,13-dichloro-3,10-bis-((4-(2,5-disulfonatoanilino)-6-fluoro-1,3,5-triazin-2-ylamino)prop-3-ylamino)-5,12-dioxa-7,14-diazapentacène-4,11-disulfonate d'hexasodium

4. Produit colorant selon l'une quelconque des revendications précédentes, dans lequel le colorant réactif contient au moins 50 %, ou au moins 60 %, ou au moins 70 %, ou au moins 75 %, ou au moins 80 %, ou au moins 85 %, ou au moins 90 % ou au moins 95 % en poids du colorant lui-même, ou un colorant réactif noir, bleu marine ou bleu foncé, ou un mélange de ceux-ci, le colorant réactif noir étant CI Reactive 5 et/ou le colorant réactif bleu marine étant Cl Reactive Blue 225.

5. Produit colorant selon l'une quelconque des revendications précédentes, dans lequel le sel dans la composition colorante ou dans la composition de fixation du colorant est du chlorure de sodium ou du sulfate de sodium.

6. Produit colorant selon l'une quelconque des revendications précédentes, dans lequel le sel alcalin dans la composition colorante ou dans la composition de fixation du colorant contient au moins un parmi le carbonate de sodium, l'hydroxyde de sodium, le métasilicate de sodium, le bicarbonate de sodium et le phosphate de trisodium.

7. Produit colorant selon l'une quelconque des revendications précédentes, dans lequel la composition colorante contient un agent anti-agglutinement ou agent de fluidisation ; et/ou dans lequel la composition colorante contient en outre 0,1 à 1 % en poids d'additifs mineurs, comme des parfums ; et/ou dans lequel la composition colorante est sous forme particulaire et/ou granulaire et/ou de poudre.

8. Produit colorant selon l'une quelconque des revendications précédentes, dans lequel la composition colorante contient le colorant réactif à hauteur de 45 à 65 %, ou 50 à 60 %, ou 55 à 65 %, ou 60 à 70 % en poids de la composition colorante totale dans le sachet perméable à l'eau.

9. Produit colorant selon l'une quelconque des revendications précédentes, dans lequel la composition colorante contient 35 à 55 %, ou 40 à 50%, ou 35 à 45 %, ou 30 à 40 % en poids de la composition colorante totale, dans le sachet perméable à l'eau, d'un mélange de sel et d'alcalin ; et/ou dans lequel le rapport pondéral du sel à l'alcali dans la composition colorante est de 2,5:1 à 7:1, ou de 3,5:1 à 5:1 ou de 4:1 à 5:1.

10. Produit colorant selon l'une quelconque des revendications précédentes, dans lequel la composition de fixation du colorant contient un mélange d'un ou plusieurs alcalis et d'un ou plusieurs sels.

11. Produit colorant selon l'une quelconque des revendications précédentes, dans lequel le rapport pondéral de la composition colorante à la composition de fixation de colorant est de 1:5 à 1:10 ou de 1:6 à 1:10 ou de 1:6 ou de 1:8.

12. Produit colorant selon l'une quelconque des revendications précédentes, dans lequel le récipient imperméable à l'eau contenant la composition de fixation de colorant est un sachet.

13. Produit colorant selon l'une quelconque des revendications précédentes, dans lequel le sachet imperméable à l'eau contenant la composition colorante et le récipient imperméable à l'eau contenant la composition de fixation du colorant sont contenus dans un emballage unique.

14. Procédé de coloration d'un tissu utilisant un produit colorant selon l'une quelconque des revendications précédentes, le procédé comprenant :
a) le placement du sachet perméable à l'eau contenant la composition colorante, de la composition de fixation du colorant et du tissu à teindre dans la tambour d'une machine à laver ; et
b) laisser se faire la coloration à une température entre 30°C et 60°C.

15. Procédé selon la revendication 14, dans lequel le sachet perméable à l'eau contient 40 à 50 g de composition colorante, la composition de fixation du colorant est présente à hauteur de 300 à 400 g, et le poids du tissu est de 200 g à 1,2 kg ; et/ou dans lequel la température à l'étape b) est de 40°C.
